# EUROPÄISCHE PATENTSCHRIFT

(11) **EP 1 911 340 B1**
(45) Veröffentlichungstag und Bekanntmachung des Hinweises auf die Patenterteilung: **12.05.2010**
(21) Anmeldenummer: 07020005.0
(22) Anmeldetag: 12.10.2007
(51) Int. Cl.: A01C 7/20, A01C 5/06

(54) **Doppelscheibenschar mit Tiefenführungsrolle und Schwenkmechanismus**
Double disc coulter with depth guide roller and swivel mechanism
Soc à double disque doté d'un rouleau de guidage en profondeur et mécanisme de pivotement

(30) Priorität: 14.10.2006 DE 102006048671
(43) Veröffentlichungstag der Anmeldung: 16.04.2008
(73) Patentinhaber: Lemken GmbH & Co. KG, 46519 Alpen (DE)
(72) Erfinder: Werries, Dieter, 46519 Alpen (DE); Gebbeken, Martin, 46519 Alpen (DE); Meurs, Wilhelm, 46519 Alpen (DE)
(74) Vertreter: Schulte, Jens Michael

(56) Entgegenhaltungen:
- EP-A- 1 285 564
- EP-A- 1 529 431
- DE-A1- 3 117 536
- DE-A1-102004 008 089
- DE-U1- 29 605 356

## Beschreibung

Die Erfindung betrifft einen Doppelscheibenschar mit Tiefenführungsrolle für Drillmaschinen gemäß dem Oberbegriff des Patentanspruches 1. Eine derartige Drillmaschine ist dem kanadischen Patent CA 2 023 239 und dem europäischen Patent EP 1 060 649 B1 zu entnehmen. Dort wird als Gegenstand jeweils eine wartungsfreie Schwenkachse für das Doppelscheibenschar gezeigt, die mit Gummifedern ausgerüstet ist. Diese üblichen Gummifedern bestehen aus vier Gummiwürsten, die in quadratischen Rohrstücken oder Verschraubungen geführt sind und gleichzeitig auch als Energiespeicher dienen, mit denen das jeweilige Doppelscheibenschar gegen den Boden gedrückt werden kann. Einerseits bauen diese gummigefederten Schwenkachsen sehr groß, was in vielen Fällen Freiraumprobleme mit sich bringt, zum anderen kann damit kein in zumutbaren Grenzen gleichmäßiger Schardruck eingestellt und eingehalten werden. Die jeweils zugehörigen Tiefenführungsrollen können von der Anordnung her in welligen oder unebenen Bodenverhältnissen ebenfalls keine gleichmäßige Arbeitstiefe sicherstellen. Aus der EP 1 285 564 ist eine Sämaschine mit Tiefeneinstellung durch ein hydraulisches Ausgleichssystem bekannt. Dabei handelt es sich um ein einfaches Scheibenschar mit einem Rahmen, an den mittels Lenker nebeneinander und zueinander höhenbeweglich Tiefenführungsrollen angeordnet sind. Die Scheibenschare sind gemeinsam mittels einer Parallelogrammaufhängung am Rahmen angelenkt, wobei die Tiefenführungsrollen mittels einer Viergelenkaufhängung am Rahmen positioniert sind. Der die Tiefenführungsrolle tragende Lenkerarm dieser Viergelenkanordnung ist an einem am Rahmen schwenkbar angeordneten Verstellarm bzw. an einem zwischen zwei Verstellarmen angeordneten Tragrohr angelenkt. Hydraulikzylinder sind zwischen Lenkarm und Rahmen bzw. zwischen Verstellarm und Rahmen vorgesehen, um eine Art Ausgleichssystem zwischen dem Rahmen und den Tragfedern einerseits und dem Rahmen und dem Verstellarm andererseits zu schaffen. Nachteilig ist an dieser Lösung allerdings, dass die vorerwähnten Bauteile sämtlich hohes Gewicht aufweisen, sodass ein gleichmäßiger Schardruck nur schwer eingestellt bzw. eingehalten werden kann. Je problematischer die Bodenverhältnisse sind, desto schwieriger wird es, die gewünschte gleichmäßige Arbeitstiefe zu gewährleisten.

Aufgabe der Erfindung ist es, ein Doppelscheibenschar mit Tiefenführungsrolle für Drillmaschinen zu schaffen, dessen Gelenke wartungsfrei sind, bei dem nicht nennenswert der voreingestellte Schardruck beeinflusst wird und bei dem die Arbeitstiefe gleichmäßig über die Tiefenführungsrolle geführt wird, auch in unebenem Gelände.

Diese Aufgabe wird erfindungsgemäß durch die Merkmale des kennzeichnenden Teils des Patentanspruches 1 gelöst.

Die wartungsfreien Gelenke mit den Gummilagern üben weitestgehend keine Rückstellkräfte auf das Doppelscheibenschar aus. Somit beeinflussen sie nicht den voreingestellten Schardruck. Der Schardruck kann unabhängig davon über einen Energiespeicher wie z.B. über eine Feder mit Verstelleinrichtung eingestellt werden.

Die Erfindung sieht weiter vor, dass der Schwenkarm über einen Verbindungslenker mit dem Tragarm des Doppelscheibenschares verbunden ist, wobei der Verbindungslenker so mit den Tragarm und dem Schwenkarm verbunden ist, dass getriebetechnisch eine annähernd parallele Führung des Doppelscheibenschares durch die Tiefenführungsrolle gewährleistet und der Verbindungslenker in Druckrichtung nachgebend ausgebildet ist.

Durch das Vorsehen eines separaten Schwenkarmes für die Tiefenführungsrolle und eines Lenkers, der in Druckrichtung nachgeben kann, wird das Doppelscheibenschar zwar durch die Tiefenführungsrolle in der Tiefe geführt, bei Auftreffen des Doppelscheibenschares auf ein Bodenhindemis weicht aber nur das Doppelscheibenschar aus, nicht aber die Tiefenführungsrolle. Dadurch können die entsprechenden Bauteile leichter ausgeführt werden, was insgesamt eine kostengünstigere Herstellung der Drillmaschine ermöglicht.

Weiter sieht die Erfindung vor, dass das jeweilige Gummilager aus einer Außenhülse mit großem Innendurchmesser und einer Innenhülse mit kleinerem Außendurchmesser als der Innendurchmesser der Außenhülse besteht und dass die beiden Hülsen mittels Gummi oder Kunststoffmaterial torsionselastisch miteinander verbunden sind. Diese Ausführung der Gummilager ist sehr kompakt und einfach zu montieren. Bei der Montage wird z.B. die Außenhülse fest mit den dafür vorgesehenen Bauteilen des Scharrahmens verspannt, die Innenhülse wird mit dem Tragrahmen oder mit dem Schwenkarm fest verschraubt. Dadurch wird ein vertikales Verschwenken des Doppelscheibenschares und der Tiefenführungsrolle nur noch über das torsionselastische Gummi- oder Kunststoffmaterial oder andere vergleichbare Materialien ermöglicht. Ein Verschleiß der Bauteile ist im gesamten Gelenkbereich ausgeschlossen. Dabei ist es vorteilhaft, wenn dies möglichst rückstellkraftfrei oder rückstellkraftarm geschieht, damit der über den Energiespeicher erzeugte Schardruck auch während der vertikalen Schwenkbewegungen des Doppelscheibenschares und der Tiefenführungsrolle möglichst nicht beeinflusst wird. Bei größeren Rückstellkräften oder negativen Rückstellkräften der Gummilager würden diese Einfluss nehmen auf den voreingestellten Schardruck und auch auf die Eindringtiefe der Tiefenführungsrolle in den Boden.

Die Erfindung sieht weiter vor, dass der Verbindungslenker mit seinem oberen Verbindungspunkt im Abstand A zu der Querachse zwischen der Querachse und der Achse der Tiefenführungsrolle mit dem Schwenkarm der Tiefenführungsrolle und mit seinem unteren Verbindungspunkt im Abstand B zu der Schwenkachse zwischen der Schwenkachse und der Achse des Doppelscheibenschares mit dem Tragarm verbunden ist und dass der Abstand A zum Abstand B annähernd in dem Verhältnis steht wie der Abstand C zwischen der Querachse und der Achse der Tiefenführungsrolle zum Abstand D zwischen der Schwenkachse und der Achse des Doppelscheibenschares. Durch diese getriebetechnische Anordnung wird mit einfachen Mitteln gewährleistet, dass die Tiefenführungsrolle das Doppelscheibenschar exakt in der Tiefe führt. Wenn die Tiefenführurigerolle in unebenem Gelände nach oben oder nach unten bewegt wird, wird das Doppelscheibenschar jeweils um den gleichen Betrag in seiner Lage verändert. Damit bleibt die voreingestellte Sätiefe immer gleich.

Die Erfindung sieht weiter vor, dass der Verbindungslenker, der Tragarm oder der Schwenkarm ein Langloch aufweisen, die bei Auftreffen des Doppelscheibenschares auf ein Hindernis ein durch die Länge des Langloches vorgegebenes Ausweichen des Doppelscheibenschares ohne Beeinflussung der Stellung des Tiefenführungsrolle zulassend ausgebildet ist. Durch das Vorsehen eines Langloches kann das Doppelscheibenschar nach oben ausweichen ohne dass die Tiefenführungsrolle mit angehoben werden muss. Je nach Länge des Langloches wird damit ein entsprechend großer Ausweichweg ermöglicht.

Die Erfindung sieht weiter vor, dass der Verbindungslenker als Kette, Seil, Band, Blattfeder oder Knicklenker ausgebildet ist, die bei Auftreffen des Doppelscheibenschares auf ein Hindernis ein weitestgehend unbehindertes Ausweichen des Doppelscheibenschares sicherstellen. Das Vorsehen derartiger Bauteile wie z.B. einer Kette oder eines Drahtseiles als Verbindungslenker vereinfacht die Ausführung des Verbindungslenkers erheblich. Insbesondere behindert eine Kette oder ein Drahtseil das Doppelscheibenschar nicht in seiner Ausweichbewegung, wenn es gegen ein Hindernis stößt. Das entsprechende Bauteil knickt ein und lässt einen Ausweichweg des Doppelscheibenschares so weit zu, bis es aus anderen baulichen Gründen nicht mehr weiter ausweichen kann, z.B. wenn es gegen seinen Endanschlag stößt. Je nach Ausführung des Verbindungslenkers, z.B. als eine Kette oder Blattfeder oder als ein Knicklenker, Seil oder Band kann ein Zurückschwenken des Doppelscheibenschares in seine ursprüngliche Arbeitsstellung zusätzlich noch gedämpft werden. Dazu kann z.B. eine vorgespannte Feder oder ein vorgespannter Gummiblock am entsprechenden Bauteil vorgesehen werden, die bei Erreichen einer vorgegebenen Kraft den Rückschlag dämpfen. Die vorgegebene Kraft ist dann allerdings höher als die Zugkraft im Verbindungslenker während der Arbeit, um die Präzision der Tiefenführung nicht zu beeinflussen.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Seitenansicht der Aufhängung des Doppelscheibenschares und der Tiefenführungsrolle,
- Figur 2: eine Seitenansicht des Doppelscheibenschares mit Tiefenführungsrolle und
- Figur 3: eine andere Seitenansicht des Doppelscheibenschares mit Tiefenführungsrolle.

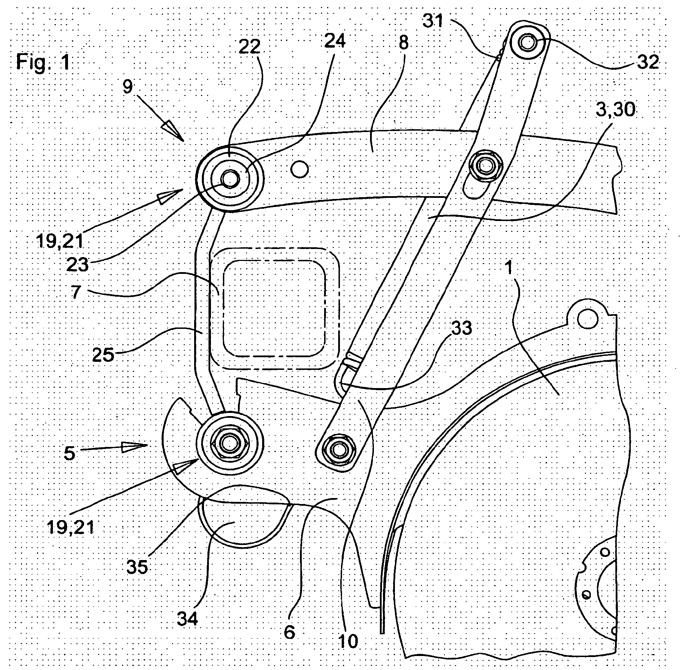

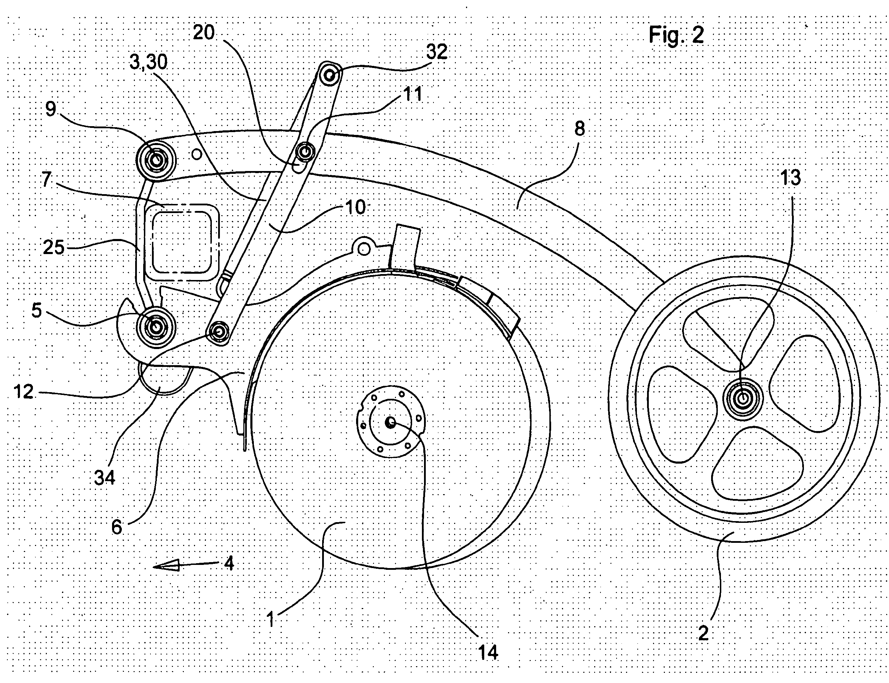

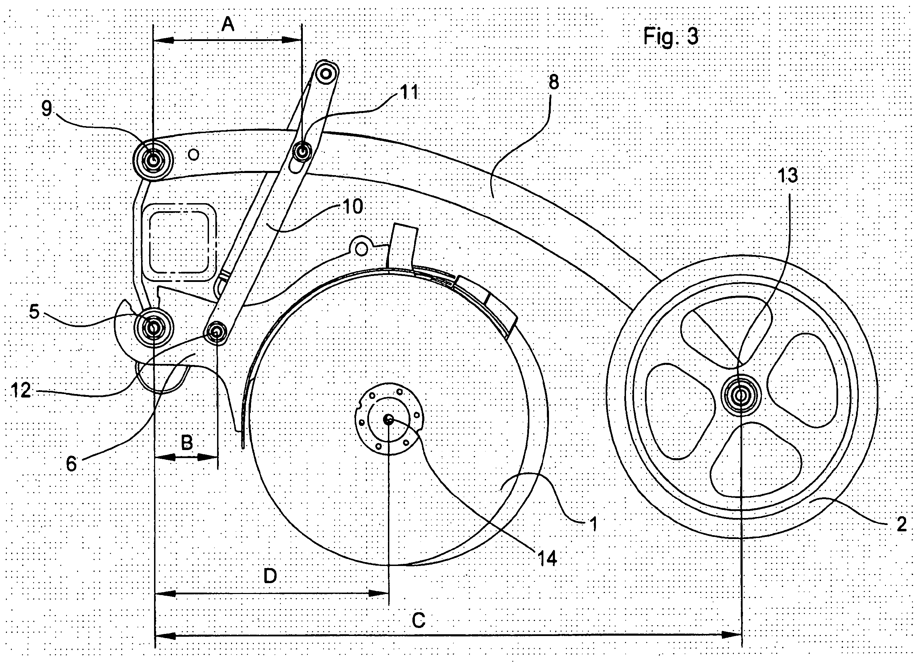

Figur 1 zeigt eine Seitenansicht der Aufhängung des Doppelscheibenschares 1 und der in dieser Figur nicht abgebildeten Tiefenführungsrolle 2. Am Scharrahmen 7 ist der Träger 25 befestigt, der zum einen die Querachse 9 des Schwenkarmes 8 und zum anderen die Schwenkachse 5 des Tragarmes 6 des Doppelscheibenschares 1 aufnimmt. Sowohl die Schwenkachse 5 als auch die Querachse 9 sind als wartungsfreie Gelenke 19 ausgebildet mit Gummilager 21. Jedes Gummilager besteht aus einer Außenhülse 22, einer Innenhülse 23 und einem dazwischen angeordnetem Gummi- oder Kunststoffmaterial 24, das die Hülsen torsionsweich miteinander verbindet. Der Lenker 10 ist sowohl mit dem Tragarm 6 als auch mit dem Schwenkarm 8 gelenkig verbunden. Darauf wird näher in der Beschreibung der Figur 2 eingegangen. Über den Energiespeicher 3, in diesem Fall eine Feder 30, wird der Tragarm 6 mit dem Doppelscheibenschar 1 auf den Boden gedrückt. Die Feder 30 ist mit ihrem einen Ende 31 mit der Federaufhängung 32 verbunden. Das andere Ende 33 der Feder 30 ist mit dem Drahtseil 35 verbunden, das mit dem Querrohr 34 verbunden ist. Das Querrohr 34 ist drehbar am Scharrahmen 7 gelagert. Durch Verdrehen des Querrohres 34 wird die Vorspannung der Feder 30 erhöht und auch gleichzeitig der Schardruck des Doppelscheibenschares 1. Um eine parallele Führung des Doppelscheibenschares 1 in Relation zur Tiefenführungsrolle 2 sicherzustellen, steht der Verbindungslenker 10 in besonderer Verbindung mit dem Schwenkarm 8 der Tiefenführungsrolle 2 und dem Tragarm 6 des Doppelscheibenschares 1. Darauf wird in der Beschreibung der Figur 3 näher eingegangen.

Figur 2 zeigt eine komplette Seitenansicht des Doppelscheibenschares 1 mit Tiefenführungsrolle 2. Die Tiefenführungsrolle 2 mit ihrer Achse 13 ist in Arbeitsrichtung 4 gesehen hinter dem Doppelscheibenschar 1 angeordnet und mit dem Schwenkarm 8 verbunden. Das Doppelscheibenschar 1 ist mit seiner Achse 14 mit dem Tragarm 6 verbunden. Sowohl das Doppelscheibenschar 1 als auch die Tiefenführungsrolle 2 sind vertikal schwenkbar über die Schwenkachse 5 und der Querachse 9 mit dem Träger 25 und darüber mit dem Scharrahmen 7 verbunden. Der Verbindungslenker 10 weist oben die Federaufhängung 32 und im Bereich des oberen Verbindungspunktes 11 einen Schlitz 20 auf. Der Verbindungslenker 10 ist mit dem unteren Verbindungspunkt 12 mit dem Tragarm 6 des Doppelscheibenschares 1 verbunden. Wenn das Doppelscheibenschar 1 gegen ein Bodenhindernis stößt, weicht es nach oben aus. Dabei wird das Doppelscheibenschar 1 zusammen mit dem Verbindungslenker 10 gegen die Kraft des Energiespeichers 3 bzw. der Feder 30 nach oben bewegt, und zwar so weit wie es das Langloch 20 zulässt. Erst danach würde zusätzlich auch die Tiefenführungsrolle nach oben ausweichen. Denkbar ist auch der Einsatz eines Knicklenkers anstatt des Verbindungslenkers 10, der dann eine größere Ausweichhöhe des Doppelscheibenschares 1 zulassen würde. Das gleiche gilt für den Einsatz von Ketten oder Seilen als Verbindungslenker 10, die dann ebenfalls eine große Ausweichhöhe des Doppelscheibenschares 1 zulassen würden. Der Energiespeicher 3 müsste dann getriebetechnisch angepasst angeordnet werden.

Figur 3 zeigt eine weitere Seitenansicht des Doppelscheibenschares 1 mit Tiefenführungsrolle 2. Sie verdeutlicht insbesondere die getriebetechnische Anordnung des Verbindungslenkers 10, des Schwenkarms 8 und des Tragarms 6. Um eine genaue Parallelführung des Doppelscheibenschares 1 in Relation zur Tiefenführungsrolle 2 sicherzustellen, wurde der Verbindungslenker 10 mit dem oberen Verbindungspunkt 11 im Abstand A zu der Querachse 9 mit dem Schwenkarm 8 der Tiefenführungsrolle 2 und mit dem unteren Verbindungspunkt 12 im Abstand B zu der Schwenkachse 5 mit dem Tragarm 6 des Doppelscheibenschares 1 verbunden. Der Abstand A zu dem Abstand B steht annähernd im gleichen Verhältnis wie der Abstand C zwischen der Querachse 9 und der Achse 13 der Tiefenführungsrolle 2 zu dem Abstand D zwischen der Schwenkachse 5 und der Achse 14 des Doppelscheibenschares 1.

## Patentansprüche

1. Doppelscheibenschar (1) mit Tiefenführungsrolle (2) für Drillmaschinen, bei dem das Doppelscheibenschar (1) um eine quer zur Arbeitsrichtung (4) angeordneten wartungsfreien Schwenkachse (5) mit Gummifedern in vertikaler Richtung schwenkbar mittels Tragarm (6) mit dem Scharrahmen (7) der Drillmaschine verbunden und über die Tiefenführungsrolle (2) in der Arbeitstiefe geführt ist, die einen Schwenkarm (8) aufweist, der um eine quer zur Arbeitsrichtung (4) und im Abstand zur Schwenkachse (5) des Doppelscheibenschares (1) angeordneten Querachse (9) in vertikaler Richtung schwenkbar mit dem Scharrahmen (7) verbunden ist, wobei die Schwenkachse (5) und die Querachse (9) jeweils mit einem wartungsfreien Gelenk (19) mit einem rückstellkraftfreien bzw. rückstellkraftarmen Gummilager (21) ausgerüstet ist und wobei ein Energiespeicher (3), vorzugsweise eine Feder (30) vorgesehen ist, die den Schardruck des Doppelscheibenschares (1) auf den Boden erzeugend ausgebildet ist,
**dadurch gekennzeichnet,**
**dass** der Schwenkarm (8) über einen Verbindungslenker (10) mit dem Tragarm (6) des Doppelscheibenschares (1) verbunden ist, wobei der Verbindungslenker (10) so mit den Tragarm (6) und dem Schwenkarm (8) verbunden ist, dass getriebetechnisch eine annähernd parallele Führung des Doppelscheibenschares (1) durch die Tiefenführungsrolle (2) gewährleistet und der Verbindungslenker (10) in Druckrichtung nachgebend ausgebildet ist.

2. Doppelscheibenschar nach Anspruch 1,
**dadurch gekennzeichnet,**
**dass** das jeweilige Gummilager (21) aus einer Außenhülse (22) mit großem Innendurchmesser und einer Innenhülse (23) mit kleinerem Außendurchmesser als der Innendurchmesser der Außenhülse (22) besteht und dass die beiden Hülsen (22) und (23) mittels Gummi oder Kunststoffmaterial (24) torsionselastich miteinander verbunden sind.

3. Doppelscheibenschar nach Anspruch 1,
**dadurch gekennzeichnet,**
**dass** der Verbindungslenker (10) mit seinem oberen Verbindungspunkt (11) im Abstand (A) zu der Querachse (9) zwischen der Querachse (9) und der Achse (13) der Tiefenführungsrolle (2) mit dem Schwenkarm (8) der Tiefenführungsrolle (2) und mit seinem unteren Verbindungspunkt (12) im Abstand (B) zu der Schwenkachse (5) zwischen der Schwenkachse (5) und der Achse (14) des Doppelscheibenschares (1) mit dem Tragarm (6) verbunden ist und dass der Abstand (A) zum Abstand (B) annähernd in dem Verhältnis steht wie der Abstand C zwischen der Querachse (9) und der Achse (13) der Tiefenführungsrolle (2) zum Abstand D zwischen der Schwenkachse (5) und der Achse (14) des Doppelscheibenschares (1).

4. Doppelscheibenschar nach Anspruch 1,
**dadurch gekennzeichnet,**
**dass** der Verbindungslenker (10), der Tragarm (6) oder der Schwenkarm (8) ein Langloch (20) aufweisen, dass bei Auftreffen des Doppelscheibenschares (1) auf ein Hindernis ein durch die Länge des Langloches (20) vorgegebenes Ausweichen des Doppelscheibenschares (1) ohne Beeinflussung der Stellung der Tiefenführungsrolle (2) zulassend ausgebildet ist.

5. Doppelscheibenschar nach Anspruch 1 oder 2,
**dadurch gekennzeichnet,**
**dass** der Verbindungslenker (10) als Kette, Seil, Band, Blattfeder oder Knicklenker ausgebildet ist, die bei Auftreffen des Doppelscheibenschares (1) auf ein Hindernis ein weitestgehend unbehindertes Ausweichen des Doppelscheibenschares (1) zulassend ausgebildet sind.

## Claims

1. A double disc coulter (1) with a depth guide roller (2) for drilling machines, in which the double disc coulter (1) is connected, by means of a support arm (6), in vertical direction and in a pivotable manner with the coulter frame (7) of the drilling machine around a maintenance-free swivelling axle (5), having rubber springs, which is arranged transverse to the working direction (4) and is guided by means of the depth guide roller (2) in the working depth, the depth guide roller having a swivelling arm (8), which is connected with the coulter frame (7) in vertical direction and in a pivotable manner around a transverse axle (9) arranged transverse to the working direction and at a distance from the swivelling axle (5) of the double disk coulter (1), the swivelling axle (5) and the transverse axle (9) each being equipped with a maintenance-free hinge (19) with a rubber bearing (21) free of or low in restoring force and an energy store (3), perferably a spring (30) being provided which is formed so as to generate the blade pressure of the double disc coulter (1) on the ground,
**characterized in that**
the swivelling arm (8) is connected with the support arm (6) of the double disc coulter (1) by means of a connecting rod (10), the connecting rod (10) being connected with the support arm (6) and the swivelling arm (8) in such a manner that an almost parallel guiding of the double disc coulter (1) by the depth guide roller is guaranteed in terms of the gearing and the connecting rod (10) is formed so as to yield in the direction of pressure

2. The doubledisc coulter in accordance with Claim 1,
**characterized in that**
the respective rubber bearing (21) consists of an outer shell (22) with a large inner diameter and an inner shell (23) with a smaller outer diameter than the inner diameter of the outer shell (22) and that both shells (22) and (23) are connected with each other with rubber or synthetic material (24) in a torsion elastic manner.

3. The doubledisc coulter in accordance with Claim 1,
**characterized in that**
the connecting rod (10) is connected with the swivelling arm (8) of the depth guide roller (2) with its upper connection point (11) at a distance (A) to the transverse axle (9) between the transverse axle (9) and the axle (13) of the depth guide roller (2) and connected with the support arm (6) with its lower connection point (12) at a distance (B) to the swivelling axle (5) between the swivelling axle (5) and the axle (14) of the double disc coulter (1) and that the distance (A) to the distance (B) is approximately proportional to the distance C between the transverse axle (9) and the axle (13) of the depth guide roller (2) to the distance D between the swivelling axle (5) and the axle (14) of the double disc coulter (1).

4. The doubledisc coulter in accordance with Claim 1,
**characterized in that**
the connecting rod (10), the support arm (6) or the swivelling arm (8) have a longitudinal hole (20), which is formed so as to permit an avoidance of the double disc coulter (1) predefined by the length of the longitudinal hole without influencing the position of the depth guide roller (2) when the double disc coulter (1) hits an obstacle.

5. The double disc coulter in accordance with Claim 1 or 2,
**characterized in that**
the connecting rod (10) is formed as a chain, cable, band, compound spring or articulated rod formed so as to permit the double disc coulter to avoid obstacles as unhindered as possible when the double disc coulter hits an obstacle.

## Revendications

1. Soc à double disque (1) doté d'un rouleau de guidage en profondeur (2) pour machines à semer, où le soc à double disque (1) est relié au bâti du soc (7) de la machine à semer de manière pivotante dans le sens vertical autour d'un axe de pivotement (5) à ressorts en caoutchouc ne nécessitant aucune maintenance disposé transversalement par rapport au sens de travail (4) au moyen d'un bras porteur (6) et est conduit par l'intermédiaire du rouleau de guidage en profondeur (2) dans la profondeur de travail, le rouleau présentant un bras pivotant qui est relié au bâti du soc de manière pivotante dans le sens vertical autour d'un axe transversal (9) disposé transversalement par rapport au sens de travail (4) à une distance de l'axe de pivotement (5) du soc à double disque (1), étant donné que l'axe de pivotement (5) et l'axe transversal (9) sont dotés chacun d'un joint articulé (19) ne nécessitant aucune maintenance à palier en caoutchouc (21) sans force de rappel ou nécessitant une faible force de rappel, et étant donné qu'un accumulateur d'énergie (3), de préférence un ressort (30) est prévu pour générer la pression de soc du soc à double disque (1) sur le sol,
**caractérisé en ce que**
le bras pivotant (8) est relié par l'intermédiaire d'une bielle de liaison (10) au bras porteur (6) du soc à double disque (1), étant donné que la bielle de liaison (10) est reliée au bras porteur (6) et au bras pivotant (8) de manière à ce que soit garanti par les engrenages un guidage pratiquement parallèle du soc à double à disque (1) par le rouleau de guidage en profondeur (2) et la bielle de liaison (10) est formée de manière à céder dans le sens de la pression.

2. Soc à double disque selon la revendication 1,
**caractérisé en ce que**
chaque palier en caoutchouc (21) se compose d'une douille externe (22) de grand diamètre intérieur et d'une douille interne (23) de diamètre extérieur plus petit que le diamètre intérieur de la douille externe (22), et **en ce que** les deux douilles (22) et (23) sont reliées l'une à l'autre de manière élastique en torsion au moyen d'un caoutchouc ou d'un autre matériau en plastique (24).

3. Soc à double disque selon la revendication 1,
**caractérisé en ce que**
la bielle de liaison (10) est reliée au bras porteur (6) par son point de liaison supérieur (11) à une distance (A) de l'axe transversal (9) entre l'axe transversal (9) et l'axe (13) du rouleau de guidage en profondeur (2) au bras pivotant (8) du rouleau de guidage en profondeur (2) et par son point de liaison inférieur (12) à une distance (B) de l'axe pivotant (5) entre l'axe pivotant (5) et l'axe (14) du soc à double disque (1), et **en ce que** le rapport entre la distance (A) et la distance (B) est pratiquement égal au rapport entre la distance C entre l'axe transversal (9) et l'axe (13) du rouleau de guidage en profondeur (2) et la distance D entre l'axe de pivotement (5) et l'axe (14) du soc à double disque (1).

4. Soc à double disque selon la revendication 1,
**caractérisé en ce que**
la bielle de liaison (10), le bras porteur (6) ou le bras pivotant (8) présente un trou oblong (20), **en ce que**, lorsque le soc à double disque (1) rencontre un obstacle, un déport, déterminé par la longueur du trou oblong (20), du soc à double disque (1) est possible sans influencer la position du rouleau de guidage en profondeur (2).

5. Soc à double disque selon la revendication 1 ou 2,
**caractérisé en ce que**
la bielle de liaison (10) est formée comme chaîne, corde, bande, ressort à lames ou bielle articulée qui, lorsque le soc à double disque (1) rencontre un obstacle, permet un déport autant que possible libre du soc à double disque (1).
